# EUROPEAN PATENT SPECIFICATION

(11) **EP 4 127 915 B1**
(45) Date of publication and mention of the grant of the patent: **22.07.2026**
(21) Application number: 21712478.3
(22) Date of filing: 12.03.2021
(51) Int. Cl.: G06F 9/48

(54) **PARALLEL PROCESSING**
PARALLELVERARBEITUNG
TRAITEMENT PARALLÈLE

(30) Priority: 23.03.2020 US 202062993221 P
(43) Date of publication of application: 08.02.2023
(73) Proprietor: Telefonaktiebolaget LM ERICSSON (PUBL), 16483 Stockholm (SE)
(72) Inventor: LINDBO, Dag, 191 44 Sollentuna (SE); ELGCRONA, Anders, 183 55 Täby (SE); EVERTSSON, Rickard, 224 79 Lund (SE); MÅNSSON, Staffan, 232 53 Åkarp (SE)
(74) Representative: Ericsson
(86) International application number: PCT/EP2021/056385
(87) International publication number: WO 2021/190960

(56) References cited:
- US-A1- 2019 253 292
- US-A1- 2019 327 762
- US-A1- 2019 364 492
- US-B1- 10 461 421

## Description

### TECHNICAL FIELD

The present disclosure relates generally to the field of parallel processing.

### BACKGROUND

Prior art US 2019/253292 A1 (ABDOLI JAVAD [CA] ET AL) 15 August 2019 (2019-08-15), relates to communications systems and methods employing orthogonal frequency division multiplexing (OFDM), and to determining subcarrier offset for such systems and methods. This publication discloses that a middle subcarrier of a baseband OFDM signal of each numerology may need to be shifted appropriately with respect to other numerologies to comply with a nested grid. These shifts can be signalled to the UE with an associated overhead. Methods and systems are provided to reduce overhead for OFDM communication. Reduced overhead can translate into increased bandwidth for the system, and/or reduced power/battery consumption in the UE. A transmitter generates an OFDM signal associated with a first subcarrier spacing of a first numerology (µ), a middle subcarrier frequency of a set of usable resource blocks (RBs) of the first numerology being offset from a carrier frequency by a first offset having a value (k0,xµ) in units of subcarriers, the value of the first offset being defined by a specific formula. The transmitter transmits the OFDM signal according to the first subcarrier spacing and the first offset.

Parallel processing often aims towards time-effective execution of a plurality of processing jobs. Thus, there is a need for approaches for parallel processing which improve time-efficiency of existing solutions.

### SUMMARY

The invention is set out in the appended set of claims.

It should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Generally, when an arrangement is referred to herein, it is to be understood as a physical product (e.g., an apparatus) or a combination of two or more physical products. A physical product may comprise one or more parts, such as controlling circuitry in the form of one or more controllers, one or more processors, or the like.

It is an object of some embodiments to solve or mitigate, alleviate, or eliminate at least some disadvantages of the prior art.

A first aspect is a method for controlling execution in a parallel processing device of a plurality of processing jobs for communication reception in a communication network. The method comprises grouping the plurality of processing jobs into one or more groups, wherein the number of groups is less than the number of processing jobs of the plurality of processing jobs. The method also comprises launching, for each group, processing of the processing jobs of the group using a single execution call, wherein the processing comprises parallel processing of at least some of the processing jobs of the group.

In some embodiments, the processing jobs are layer one (L1) processing jobs and/or baseband (BB) processing jobs.

In some embodiments, each processing job is for a received data unit.

In some embodiments, the method further comprises receiving content of each of the data units from a radio processing device.

In some embodiments, each data unit relates to one or more of: a carrier, a baseband port, a reception antenna, and a transmitter of the data unit, wherein the transmitter is associated with a cell unit of the communication network.

In some embodiments, grouping the processing jobs comprises one or more of: letting processing jobs for data units relating to a same carrier belong to the same group, letting processing jobs for data units relating to different carriers belong to different groups, letting processing jobs for data units relating to different baseband ports belong to the same group, letting processing jobs for data units relating to different reception antennas belong to the same group, letting processing jobs for data units relating to different transmitters belong to the same group, letting processing jobs for data units relating to transmitters associated with different cell units belong to the same group, letting processing jobs with respective expected processing times that falls within a processing time range belong to the same group, letting processing jobs with respective kernel dimensions that falls within a kernel dimension range belong to the same group, letting processing jobs for the same number of baseband ports belong to the same group, letting processing jobs for data units relating to transmitters associated with respective data rates that falls within a data rate range belong to the same group, and letting processing jobs for data units relating to transmitters with the same, or over-lapping, communication resource allocation belong to the same group.

In some embodiments, the method further comprises acquiring scheduling information of the communication reception. In such embodiments, grouping the processing jobs may be based on the scheduling information.

In some embodiments, the method further comprises performing communication scheduling for which communication reception is in accordance with the grouping.

In some embodiments, the processing jobs of each group are organized in an execution graph, wherein a node of the execution graph represents one or more processing jobs of the group, and wherein launching processing of the processing jobs of the group comprises initiating execution of one or more initial nodes of the execution graph using the single execution call.

In some embodiments, each of the processing jobs relates to one or more of: an input scaling operation, a fast Fourier transform (FFT) operation, a channel estimation operation, an equalization operation, a demodulation operation, a de-scrambling operation, a de-rate matching operation, a channel decoding operation, a cyclic redundancy check (CRC) operation, a processing result read-out operation, and an end-of-execution operation.

In some embodiments, the groups are non-overlapping.

In some embodiments, at least one of the one or more groups comprises two or more processing jobs.

A second aspect is a computer program product comprising a non-transitory computer readable medium, having thereon a computer program comprising program instructions. The computer program is loadable into a data processing unit and configured to cause execution of the method according to the first aspect when the computer program is run by the data processing unit.

A third aspect is an apparatus for controlling execution in a parallel processing device of a plurality of processing jobs for communication reception in a communication network. The apparatus comprises controlling circuitry configured to cause grouping of the plurality of processing jobs into one or more groups (wherein the number of groups is less than the number of processing jobs of the plurality of processing jobs), and launch - for each group - of processing of the processing jobs of the group using a single execution call, wherein the processing comprises parallel processing of at least some of the processing jobs of the group.

In some embodiments, the apparatus further comprises the parallel processing device.

A fourth aspect is a communication node comprising the apparatus of the third aspect.

In some embodiments, any of the above aspects may additionally have features identical with or corresponding to any of the various features as explained above for any of the other aspects.

Generally, the term "letting" (e.g., in the context of letting processing jobs belong to the same group, or to different groups) should be interpreted as performing a task such as, for example, organizing, arranging, sorting, or similar.

Thus, the phrase "letting processing jobs for data units relating to a same carrier belong to the same group" may be replaced by "organizing processing jobs for data units relating to a same carrier to belong to the same group" or "arranging processing jobs for data units relating to a same carrier to belong to the same group" or "sorting processing jobs for data units relating to a same carrier to belong to the same group". Correspondingly, the phrase "letting processing jobs for data units relating to different carriers belong to different groups" may be replaced by "organizing processing jobs for data units relating to different carriers to belong to different groups" or "arranging processing jobs for data units relating to different carriers to belong to different groups" or "sorting processing jobs for data units relating to different carriers to belong to different groups". Corresponding replacements may apply to any other phrases herein involving the term "letting".

An advantage of some embodiments is that time-effective parallel execution of a plurality of processing jobs is achieved.

An advantage of some embodiments is that time-efficiency is improved compared to existing solutions.

An advantage of some embodiments is that time-efficiency is improved for launching a plurality of processing jobs for parallel execution.

### BRIEF DESCRIPTION OF THE DRAWINGS

Further objects, features and advantages will appear from the following detailed description of embodiments, with reference being made to the accompanying drawings. The drawings are not necessarily to scale, emphasis instead being placed upon illustrating the example embodiments.
Figure 1 is a flowchart illustrating example method steps according to some embodiments;
Figure 2 is a schematic block diagram illustrating an example arrangement with an example apparatus according to some embodiments;
Figure 3 is a schematic drawing illustrating some example execution graphs according to some embodiments;
Figure 4 is a schematic drawing illustrating some example parallel execution principles according to some embodiments; and
Figure 5 is a schematic drawing illustrating an example computer readable medium according to some embodiments.

### DETAILED DESCRIPTION

As already mentioned above, it should be emphasized that the term "comprises/comprising" (replaceable by "includes/including") when used in this specification is taken to specify the presence of stated features, integers, steps, or components, but does not preclude the presence or addition of one or more other features, integers, steps, components, or groups thereof. As used herein, the singular forms "a", "an" and "the" are intended to include the plural forms as well, unless the context clearly indicates otherwise.

Embodiments of the present disclosure will be described and exemplified more fully hereinafter with reference to the accompanying drawings. The solutions disclosed herein can, however, be realized in many different forms and should not be construed as being limited to the embodiments set forth herein.

In the following, embodiments will be described for time-efficient parallel processing, where execution of a plurality of processing jobs is launched by a single execution call.

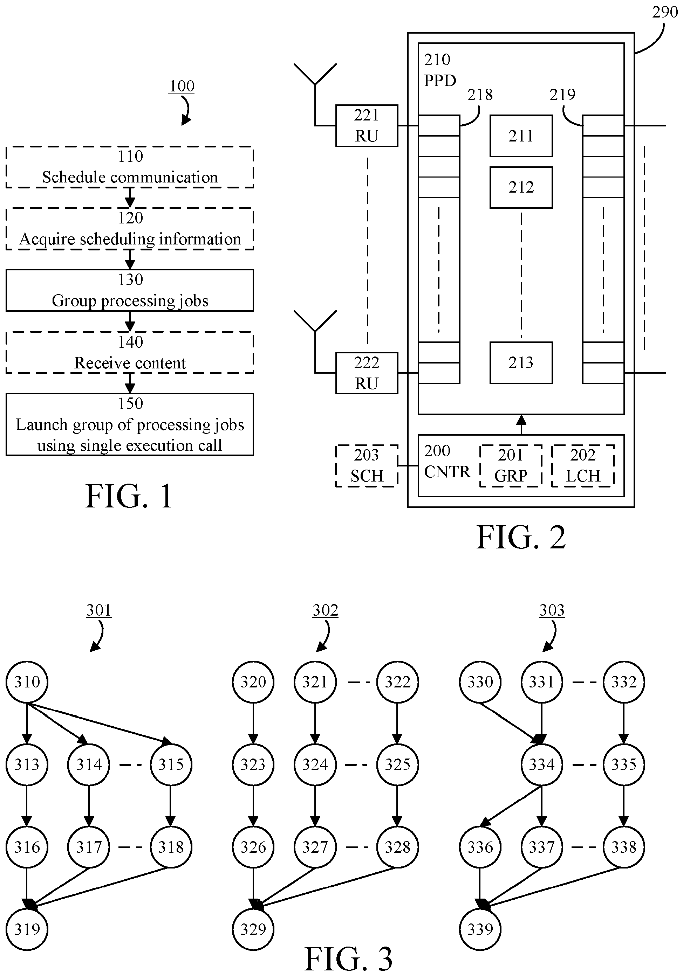

Figure 1 illustrates an example method 100 according to some embodiments. The method 100 is a method for controlling execution in a parallel processing device of a plurality of processing jobs.

For example, the method 100 may be performed by a communication node (e.g., a wireless communication node) comprising the parallel processing device. In some embodiments, the method 100 is performed by a network node of a communication network (e.g., a base station having one or more radio units, or a remote node connectable to one or more radio units of different base stations).

The processing jobs are for communication reception in a communication network. For example, the processing jobs may be layer one (L1) processing jobs and/or baseband (BB) processing jobs. In some embodiments, the processing jobs are L1 BB processing jobs. Layer one and baseband may generally be defined as conventionally in communication contexts such as, for example, wireless communication scenarios.

Generally, a processing job may relate to one or more receiver processing task. For example, a processing job may relate to an input scaling operation, a fast Fourier transform (FFT) operation, a channel estimation operation, an equalization operation, a demodulation operation, a descrambling operation, a de-rate matching operation, a channel decoding operation, a cyclic redundancy check (CRC) operation, a processing result read-out operation, and/or an end-of-execution operation.

The parallel processing device may generally be any suitable device for parallel processing of a plurality of processing jobs. Examples of the parallel processing device include a graphics processing unit (GPU), a field-programmable gate array (FPGA), an application-specific integrated circuit (ASIC), etc.

In step 130 the plurality of processing jobs are grouped into one or more (typically, but not necessarily, non-overlapping) groups. The number of groups is less than the number of processing jobs of the plurality of processing jobs. Thus, at least one group comprises two or more processing jobs.

For example, a ratio between the number of processing jobs and the number of groups may exceed a ratio threshold value. Example ratio threshold values include 2, 5, 10, 20, 50, 100, 200, 500, 1000, any value exceeding 1, any value exceeding 2, any value exceeding 5, any value exceeding 10, any value exceeding 20, any value exceeding 50, any value exceeding 100, any value exceeding 200, any value exceeding 500, and any value exceeding 1000.For example, the number of processing jobs in a (one or more of the plurality) group may exceed a job count threshold value. Example job count threshold values include 2, 5, 10, 20, 50, 100, 200, 500, 1000, any value exceeding 1, any value exceeding 2, any value exceeding 5, any value exceeding 10, any value exceeding 20, any value exceeding 50, any value exceeding 100, any value exceeding 200, any value exceeding 500, and any value exceeding 1000.

Typically, but not necessarily, the number of groups may be much less than the number of processing jobs of the plurality of processing jobs.

Typically, but not necessarily, many of the groups may comprise a large amount of processing jobs.

In some embodiments, each processing job is for a received data unit (i.e., a data unit of the communication reception). Example data units include a slot (e.g., associated with a number, e.g., 14, of time domain symbols, and/or associated with a number, e.g., 1536 or 2048, of time domain I/Q samples, and/or associated with a number of physical resource blocks - PRB:s - each associated with a number, e.g., 12, of frequency domain subcarriers), or similar.

In such embodiments, the method 100 may comprise receiving content of each of the data units from a radio processing device, as illustrated by optional step 140. Reception of the content of a data unit may be via a corresponding baseband port connectable to the radio processing device, for example.

Each data unit may relate to a received signal from a corresponding transmitter node (e.g., a user equipment, UE), and/or a signal received at a corresponding antenna, and/or a signal received on a corresponding carrier (e.g., for a carrier aggregation scenario). When a data unit relates to a received signal from a corresponding transmitter node, it may further relate to a cell unit (e.g., a cell, a cell sector, a reception beamformer, etc.) of the communication network associated with the transmitter.

The grouping of processing jobs in step 130 may comprise letting processing jobs having one or more characteristics or parameters in common belong to the same group. This may be particularly beneficial when the common characteristics or parameters affect the execution of the processing jobs.

For example, processing jobs requiring the same FFT size, and/or having the same number of symbols to process, and/or having the same number of I/Q samples per symbol, and/or having the same number of baseband ports may be suitable for inclusion in a same group.

In a further example, the grouping of processing jobs in step 130 may comprise letting processing jobs for data units relating to a same carrier belong to the same group and/or letting processing jobs for data units relating to different carriers belong to different groups. Signals of the same carrier typically have at least some parameters (e.g., one or more of: signal bandwidth, number of subcarriers, number of symbols, number of I/Q samples per symbols, etc.) in common, which may make them suitable for parallel execution.

In yet a further example, the grouping of processing jobs in step 130 may comprise letting processing jobs with respective kernel dimensions that falls within a kernel dimension range (for example processing jobs with the same kernel dimensions) belong to the same group.

Kernel dimensions may, for example, be defined through one or more of: FFT size, number of symbols to process, number of symbols in a transport block or a code block or slot, number of I/Q samples per symbol, number of baseband ports, number of low-density parity check- LDPC - code blocks, number of cells, number of subcarriers in a transport block or code block or slot, number of PRB:s in a transport block or code block or slot, number of demodulation reference signal - DMRS - symbols in a slot, number of transports blocks in a slot, number of layers, number of weights used for equalization of the received data, number of users in a slot, etc.

In yet a further example, the grouping of processing jobs in step 130 may comprise letting processing jobs for data units relating to transmitters associated with respective data rates that falls within a data rate range (e.g., transmitters having the same, or similar, data rates) belong to the same group.

In yet a further example, the grouping of processing jobs in step 130 may comprise letting processing jobs for data units relating to transmitters with the same, or over-lapping, communication resource (e.g., transport block, TB) allocation belong to the same group.

Alternatively or additionally, the grouping of processing jobs in step 130 may comprise letting processing jobs having a same, or similar, execution time belong to the same group. For example, the grouping of processing jobs in step 130 may comprise letting processing jobs with respective expected processing times that falls within a processing time range belong to the same group.

The grouping may be regardless of one or more of: baseband port, reception antenna, transmitter, and cell unit.

For example, the grouping of processing jobs in step 130 may comprise letting processing jobs for data units relating to different transmitters belong to the same group, and/or letting processing jobs for data units relating to transmitters associated with different cell units belong to the same group. Applying parallel processing for processing jobs from different transmitters and/or different cell units may be an efficient approach; particularly when the corresponding signals have at least some parameters (e.g., FFT size, number of symbols to process, number of I/Q samples per symbol, number of subcarriers, DMRS pattern, number of baseband ports, number of LDPC code blocks, etc.) in common.

In a further example, the grouping of processing jobs in step 130 may comprise letting processing jobs for data units relating to different baseband ports belong to the same group, and/or letting processing jobs for data units relating to different reception antennas belong to the same group. Applying parallel processing for processing jobs from different baseband ports and/or different antennas may be an efficient approach; particularly when the corresponding signals have at least some parameters (e.g., FFT size, number of symbols to process, number of I/Q samples per symbol, number of subcarriers, DMRS pattern, number of baseband ports, number of LDPC code blocks, etc.) in common.

It should be understood that the grouping approaches mentioned above are merely embodiments for illustration. For example, parameters or characteristics mentioned in one grouping context above may be equally applicable in other grouping contexts, as suitable.

In step 150, the processing jobs are launched. Launching comprises using a single execution call for each group, wherein the single execution call causes processing of all processing jobs of the corresponding group. Thereby, launching of a large number of processing jobs can be very time-effectively achieved.

Once launched, the processing of the processing jobs of a group comprises parallel processing of at least some of the processing jobs of the group.

In some embodiments, processing jobs may be executed in parallel within the group when they have one or more characteristic in common. For example, processing jobs which comprise a call to the same function may be executed in parallel.

In some embodiments, the processing jobs of a group are organized in an execution graph, wherein a node of the execution graph represents one or more processing jobs of the group. In such embodiments, branches of the graph may be executed in parallel. Alternatively or additionally, launching the processing of the processing jobs of such a group may comprise initiating execution of one or more initial nodes of the execution graph using the single execution call.

Generally, the grouping of processing jobs may be performed after reception of input data for the processing job (e.g., reception of data unit content), or before reception of input data for the processing job as illustrated in Figure 1. Performing the grouping before input data reception may be particularly time-efficient since then execution may be launched directly when the input data is received; without delay relating to the grouping.

Grouping of processing jobs before input data reception may, for example, be suitable when scheduling information relating to the communication reception is available before reception of input data. The scheduling information may comprise information which is useful for performing the grouping (e.g., transmitter allocations and parameters as exemplified above).

In such embodiments, the method 100 may further comprise acquiring scheduling information of the communication reception, as illustrated by optional step 120, and basing the grouping of processing jobs in step 130 on the scheduling information.

In some embodiments, the grouping is considered already when communication scheduling is performed, as illustrated by optional step 110. Then, the communication scheduling of step 110 may have one or more grouping requirements as input criteria and the communication scheduling may be performed such that communication reception is in accordance with a suitable grouping. For example, transmitters with one or more common parameters (e.g., data rate, carrier usage, etc.) may be allocated in simultaneously transmitted data units. Alternatively or additionally, when data from different numerologies is to be processed, cells may be scheduled together which share the same numerologies (e.g., a low-band carrier may have 106 PRB:s, while a mid-band carrier may have 273 PRB:s). Alternatively or additionally, the same channel (e.g., physical uplink shared channel - PUSCH) may be scheduled for several transmitters and/or cells in the same slot. Alternatively or additionally, the scheduling may consider other parameters (e.g., one or more of: number of layers, number of baseband ports, number of transport blocks, number of symbols, number PRB:s, number of subcarriers, etc.).

Figure 2 schematically illustrates an example arrangement with an example apparatus 290 according to some embodiments. The apparatus 290 is for controlling execution in a parallel processing device (PPD) 210 of a plurality of processing jobs. The apparatus 290 comprises a controller (CNTR; e.g., controlling circuitry or a control module) 200. Furthermore, the apparatus 290 may, or may not, comprise the parallel processing device 210.

The apparatus 290 may be for (e.g., comprisable, or comprised, in) a communication node (e.g., a wireless communication node) such as a network node of a communication network (e.g., a base station having one or more radio units, or a remote node connectable to one or more radio units of different base stations).

Alternatively or additionally, the apparatus may be configured to cause execution of (e.g., execute) one or more of the method steps described in connection to the example method 100 of Figure 1. Generally, features described in connection with Figure 1, are equally applicable for the context of Figure 2.

The controller 200 is configured to cause grouping of the plurality of processing jobs into one or more (typically, but not necessarily, non-overlapping) groups, wherein the number of groups is less than the number of processing jobs of the plurality of processing jobs (compare with step 130 of Figure 1).

To this end, the controller may comprise or be otherwise associated with (e.g., connectable, or connected, to) a grouper (GRP; e.g., grouping circuitry or a grouping module) 201. The grouper may be configured to group the plurality of processing jobs into one or more groups as exemplified herein.

The controller 200 is configured to cause, for each group, launch of processing of the processing jobs of the group using a single execution call (compare with step 150 of Figure 1).

To this end, the controller may comprise or be otherwise associated with (e.g., connectable, or connected, to) a launcher (LCH; e.g., launching circuitry or a launching module) 202. The launcher may be configured to launch processing of the processing jobs of a group using a single execution call as exemplified herein.

In some embodiments, the processing jobs are L1 BB processing jobs, and content of a plurality of data units is received from respective radio processing devices. The radio processing devices are illustrated in Figure 2 as radio units (RU:s) 221, 222, and the content of a plurality of data units is illustrated as received (compare with step 140 of Figure 1) through an input data buffer 218 associated with the parallel processing device 210.

The parallel processing of processing jobs is schematically illustrated in Figure 2 by processing tasks 211, 212, 213; each of which may, for example, correspond to one or more of: an input scaling operation, a fast Fourier transform (FFT) operation, a channel estimation operation, an equalization operation, a demodulation operation, a de-scrambling operation, a de-rate matching operation, a channel decoding operation, a cyclic redundancy check (CRC) operation, a processing result read-out operation, and an end-of-execution operation.

The parallel processing device 210 is also associated with an output data buffer 219 for buffering resulting output data from the processing jobs of the group (e.g., responsive to a processing result read-out operation), wherein the output data is to be forwarded to other processing units when suitable.

The apparatus 290 may further comprise or be otherwise associated with (e.g., connectable, or connected, to) a scheduler (SCH; e.g., scheduling circuitry or a scheduling module) 203. The scheduler 203 may be configured to provide scheduling information of the communication reception to the controller 200 (compare with step 120 of Figure 1) so that the controller may cause the grouping of the processing jobs based on the scheduling information. Alternatively or additionally, the scheduler 203 may be configure to receive one or more grouping criteria from the controller 200 and to schedule communication for which communication reception is in accordance with the grouping (compare with step 110 of Figure 1).

Figure 3 schematically illustrates three example execution graphs 301, 302, 303 according to some embodiments.

In the example execution graph 301, a plurality of processing jobs - which together make up a group - are organized such that an initial node 310 branches out to a plurality of branches. Each branch comprises two nodes 313, 316; 314, 317; 315, 318. At the end of the execution graph, all branches are merged into a single concluding node 319.

The execution of the processing jobs of the group is launched by initiating execution of the initial node 310 using a single execution call.

When execution of the processing job(s) represented by the node 310 is completed, the processing continues (without further launching) with parallel execution of processing jobs represented by the nodes 313, 314, 315.

When execution of the processing job(s) represented by the node 313 is completed, the processing of the corresponding branch continues (without further launching) with execution of processing job(s) represented by the node 316. When execution of the processing job(s) represented by the node 314 is completed, the processing of the corresponding branch continues (without further launching) with execution of processing job(s) represented by the node 317. When execution of the processing job(s) represented by the node 315 is completed, the processing of the corresponding branch continues (without further launching) with execution of processing job(s) represented by the node 318. Thus, execution of processing jobs represented by the nodes 316, 317, 318 is generally not synchronized and may, or may not, start at the same time.

When execution of all of the processing job(s) represented by the nodes 316, 317, 318 is completed, the processing continues (without further launching) with execution of processing job(s) represented by the single node 319.

For example, the node 310 may represent FFT-processing relating to a plurality of transmitters, each of the nodes 313, 314, 315 may represent one or more further tasks (e.g., channel estimation, demodulation, etc.) for a respective transmitter, each of the nodes 316, 317, 318 may represent processing result read-out for a respective transmitter, and the node 319 may represent end-of-execution.

In the example execution graph 302, a plurality of processing jobs - which together make up a group - are organized such that a plurality of initial nodes 320, 321, 322 start respective ones of a plurality of branches. Each branch comprises three nodes 320, 323, 326; 321, 324, 327; 322, 325, 328. At the end of the execution graph, all branches are merged into a single concluding node 329.

The execution of the processing jobs of the group is launched by initiating execution of all of the initial nodes 320, 321, 322 using a single execution call.

When execution of the processing job(s) represented by the node 320 is completed, the processing of the corresponding branch continues (without further launching) with execution of processing job(s) represented by the node 323. When execution of the processing job(s) represented by the node 321 is completed, the processing of the corresponding branch continues (without further launching) with execution of processing job(s) represented by the node 324. When execution of the processing job(s) represented by the node 322 is completed, the processing of the corresponding branch continues (without further launching) with execution of processing job(s) represented by the node 325. Thus, execution of processing jobs represented by the nodes 323, 324, 325 is generally not synchronized and may, or may not, start at the same time.

When execution of the processing job(s) represented by the node 323 is completed, the processing of the corresponding branch continues (without further launching) with execution of processing job(s) represented by the node 326. When execution of the processing job(s) represented by the node 324 is completed, the processing of the corresponding branch continues (without further launching) with execution of processing job(s) represented by the node 327. When execution of the processing job(s) represented by the node 325 is completed, the processing of the corresponding branch continues (without further launching) with execution of processing job(s) represented by the node 328. Thus, execution of processing jobs represented by the nodes 326, 327, 328 is generally not synchronized and may, or may not, start at the same time.

When execution of all of the processing job(s) represented by the nodes 326, 327, 328 is completed, the processing continues (without further launching) with execution of processing job(s) represented by the single node 329.

For example, the nodes 320, 321, 322 may represent input scaling relating to a plurality of transmitters (e.g., when FFT-processing has already been performed, for example, in a respective radio unit), each of the nodes 323, 324, 325 may represent one or more further tasks (e.g., channel estimation, demodulation, etc.) for a respective transmitter, each of the nodes 326, 327, 328 may represent processing result read-out for a respective transmitter, and the node 329 may represent end-of-execution.

In the example execution graph 303, a plurality of processing jobs - which together make up a group - are organized such that a plurality of initial nodes 330, 331, 332 start execution of the graph. In this example, branches are merged and split within the graph to make up an execution mesh. The execution mesh comprises five nodes 334, 335, 336, 337, 338. At the end of the execution graph, the mesh is concluded by a single concluding node 339.

The execution of the processing jobs of the group is launched by initiating execution of all of the initial nodes 330, 331, 332 using a single execution call.

When execution of the processing job(s) represented by both of the nodes 330, 331 is completed, the processing continues (without further launching) with execution of processing job(s) represented by the node 334. When execution of the processing job(s) represented by the node 332 is completed, the processing continues (without further launching) with execution of processing job(s) represented by the node 335. Thus, execution of processing jobs represented by the nodes 334, 335 is generally not synchronized and may, or may not, start at the same time.

When execution of the processing job(s) represented by the node 334 is completed, the processing continues (without further launching) with parallel execution of processing job(s) represented by the nodes 336, 337. When execution of the processing job(s) represented by the node 335 is completed, the processing of the corresponding branch continues (without further launching) with execution of processing job(s) represented by the node 338. Thus, execution of processing jobs represented by the nodes 336, 337 is synchronized, while execution of processing jobs represented by the node 338 is generally not synchronized with that of 336, 337.

When execution of all of the processing job(s) represented by the nodes 336, 337, 338 is completed, the processing continues (without further launching) with execution of processing job(s) represented by the single node 339.

For example, the nodes 330, 331, 332 may represent input scaling relating to a plurality of transmitters, the node 334 may represent one or more further tasks (e.g., channel estimation, demodulation, etc.) for two respective transmitters, the node 335 may represent one or more further tasks (e.g., channel estimation, demodulation, etc.) for a respective transmitter, each of the nodes 336, 337, 338 may represent processing result read-out for a respective transmitter, and the node 339 may represent end-of-execution.

Generally, each node of an execution graph may represent a single processing job or two or more processing jobs. In the latter case, the two or more processing jobs may be jobs for execution in parallel to each other (e.g., FFT for two or more transmitters) and/or jobs for execution sequentially (e.g., channel estimation and demodulation). For example, each node of an execution graph may represent a specific task, e.g., a GPU function (kernel).

Also generally, it should be understood that the graphs of Figure 3 are merely examples, and that a graph may have any suitable number of nodes. The nodes may be arranged in any suitable way. There may be one or more initial nodes and/or one or more concluding node. There may be any suitable number or branches. Each branch may have any suitable number of nodes, and different branches may have the same, or different, number of nodes. Furthermore, branches may be merged and/or split as suitable; forming an execution mesh.

Some further examples of scenarios and embodiments will now be presented in the context of launching fifth generation (5G) new radio (NR) graphics processing unit (GPU) processing jobs.

Commercial off-the-shelf (COTS) standard central processing unit hardware (CPU HW), e.g., x86 servers, are used in numerous applications including in mobile communication network applications. However, specialized HW is generally used for L1 processing, due to very high computational load combined with requirements on low latency and high data rates.

One approach for accommodating high computational load is to accelerate COTS CPU HW with one or more COTS graphics processing units (GPU:s) to offload heavy calculation from the CPU HW. GPU:s are typically efficient for execution of calculations that can be parallelized. This approach may be beneficial for L1 processing in mobile communication network applications.

In some L1 processing situations, it is cumbersome that the number of GPU jobs that can be launched per time unit is limited. This may be due to that the number of launch operations possible per time unit is limited, i.e., the time required for a launch may be longer than desired. When launch operations cannot be performed in parallel, but are rather executed serially, a bottleneck results for time-efficient parallel execution. Thus, there is a need for an approach wherein a plurality of jobs can be launched in parallel.

For example, in 5G NR every slot may be different and the slot times are relatively short (e.g., 1000 µs, 500 µs, 125 µs). A processing unit for L1 may need to be able to handle many UE:s and many cells, and the processing need per UE can differ substantially (e.g., depending on allocation size which may be the number of allocated communication resources such as physical resource blocks or transport blocks, data rate, etc.). Since the processing need per UE can differ substantially, it may be cumbersome to parallelize processing from different UE:s. For example, it may be necessary to wait until the processing of all UE:s of a parallelization is completed before the next processing job can be launched. Therefore, one possible approach to handle L1 processing of 5G NR is to loop the processing over all cells, to apply a front-end FFT for all reception antennas within each cell, and to looping over all UE:s within each cell for the post-FFT processing (e.g., channel estimation, equalizer weights estimation, equalization, demodulation, descrambling, de-rate matching, channel decoding, and CRC calculation). Such an approach, however, entails many launching operations (at least one per UE) which limits the processing throughput even if the GPU has larger processing capacity.

By grouping the jobs adequately, a single execution call can be used to launch all jobs of a group. Thus, the number of GPU launch calls can be reduced and the launching bottleneck for NR L1 processing on GPU can be mitigated.

For example, the uplink (UL) scheduling information is typically available several slots before reception of the actual UL inphase/quadrature (I/Q) data samples. This information may be used to prepare and re-arrange the computations of upcoming processing according to a suitable grouping.

In some embodiments, the grouping includes using a common FFT for several, or all, cells instead of starting an FFT job for each cell. For example, cells that have a same FFT-size requirement may be grouped together to use the common FFT. The common FFT may also relate to all antennas in a cell.

In some embodiments, the grouping includes processing cells together when they have similar processing needs (e.g., similar expected execution time) and/or similar kernel dimensions. For example, transport blocks (TB:s) from several cells may be processed together when they have similar numerology.

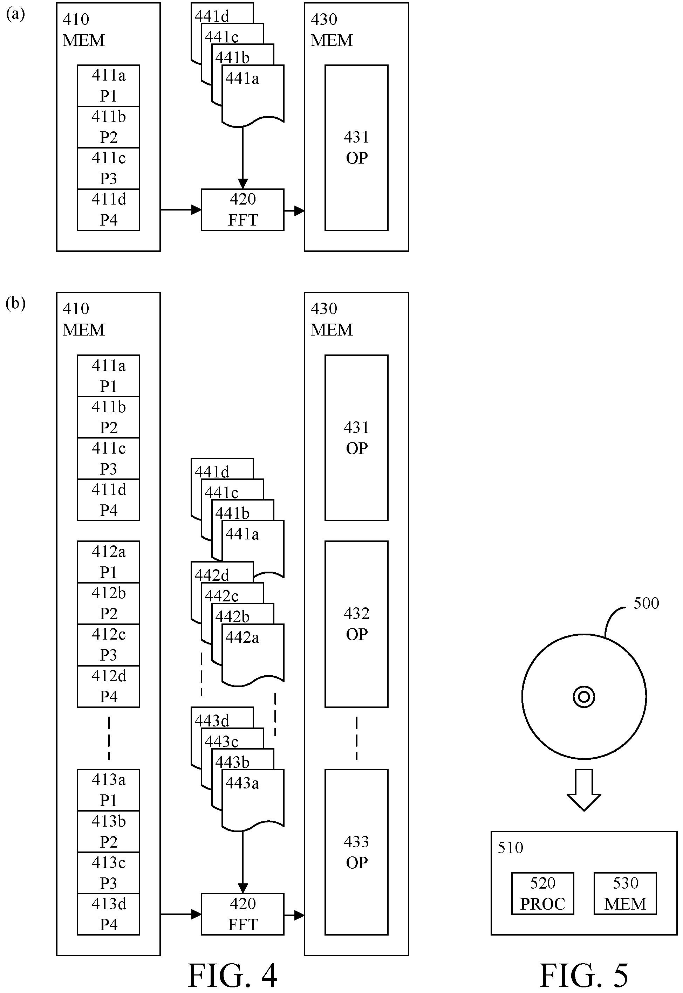

Figure 4 schematically illustrates some example parallel execution principles according to some embodiments, and will be described in the context of using a common FFT for several cells. It should be noted, however, that corresponding examples are valid for other functions (e.g., channel estimation).

In the uplink scenario of part (a), I/Q data is received from four baseband ports and put into four input buffers (P1, P2, P3, P4) 411a-d of a memory (MEM) 410-e.g., an input buffer memory - and transformed into frequency domain samples using an FFT 420 by the GPU, which frequency domain samples are output via an output buffer (OP) 431 of a memory (MEM) 430 - e.g., an output buffer memory. Typically, each input buffer contains the time domain samples of 14 OFDM symbols including cyclic prefix (i.e., 1536 or 2048 complex samples, where each sample is a 16-bit complex value).

For execution, an FFT job description data structure 441a-d may be created for each symbol to be processed. The FFT job description includes a pointer to a corresponding base address of the input buffer (i.e., a start memory address of I/Q data for the relevant baseband port), an indication of the buffer length for the relevant baseband port (i.e., an association with the slot length), and a pointer to a destination buffer where the transformed I/Q data output from the FFT function is to be stored (i.e., the output buffer 431).

The FFT function 420 may be launched from the CPU host side of the processing chain. At launch of the FFT function, it can be decided in how many threads (i.e., parallel instantiations) the function will execute. For example, when the FFT function is executed in 32 instantiations, a thread block with 32 threads may be created, wherein each thread executes the FFT function. It is typically possible to create several thread blocks, resulting in a block grid. Each thread block can execute on a corresponding parallelization instance of the GPU HW, wherein the different thread blocks execute independently and in parallel with each other.

Continuing the example of Figure 4, one thread block may be created per baseband port (i.e., per I/Q data input buffer) and per symbol combination for the FFT function (i.e., 4 · 14 = 56 thread blocks for I/Q data from four baseband ports with 14 symbols each). Each FFT function thread can retrieve its dimension using indices or function calls for the corresponding port and symbol, and each symbol has its own FFT job description 441a-d.

The above scenario, exemplified in part (a) of Figure 4, achieves FFT processing on the I/Q data from one cell unit (e.g., cell or cell sector) in a highly efficient manner. However, the efficiency may still be undesirably low when FFT processing is to be performed for a large number (e.g., 100) of cells. It may be even more efficient to increase the number of FFT job descriptions to include FFT jobs from several cells, and to increase the number of thread blocks accordingly. The latter is illustrated in part (b) of Figure 4.

In the uplink scenario of part (b), I/Q data is received from four baseband ports for several cells, put into respective four-tuples of input buffers (P1, P2, P3, P4) 411a-d; 412a-d; 413a-d of a memory (MEM) 410, and transformed into frequency domain samples using an FFT 420 by the GPU, which frequency domain samples are output via corresponding output buffers (OP) 431; 432; 433 of a memory (MEM) 430. For execution, an FFT job description data structure 441a-d; 442a-d; 443a-d may be created for each symbol to be processed, which now includes symbols from several cells.

Since each FFT job description is independent from the other ones, the FFT will generally not be affected by the fact that data for processing may belong to different cells. The grid dimension (i.e., the number of thread blocks) in which the FFT function executes can be multiplied with the number of cells in this example.

As described above, it may be suitable to group together cells that have the same numerology. For example, in a same group, the input time domain I/Q samples could preferably represent the data type (e.g., 16 bits complex) and the output frequency domain I/Q samples could preferably represent the same data type (e.g., 32 bits float). The cell numerology is typically determined at cell setup, and the numerology configuration is typically valid for a long time. The UL scheduling information is typically available a couple slots before reception of the corresponding I/Q data from the radio unit, which provides time for grouping determinations regarding the FFT processing.

The described embodiments and their equivalents may be realized in software or hardware or a combination thereof. The embodiments may be performed by general purpose circuitry. Examples of general purpose circuitry include digital signal processors (DSP), central processing units (CPU), co-processor units, field programmable gate arrays (FPGA) and other programmable hardware. Alternatively or additionally, the embodiments may be performed by specialized circuitry, such as application specific integrated circuits (ASIC). The general purpose circuitry and/or the specialized circuitry may, for example, be associated with or comprised in an apparatus such as a communication node.

Embodiments may appear within an electronic apparatus (such as a communication node) comprising arrangements, circuitry, and/or logic according to any of the embodiments described herein. Alternatively or additionally, an electronic apparatus (such as a communication node) may be configured to perform methods according to any of the embodiments described herein.

According to some embodiments, a computer program product comprises a tangible, or non-tangible, computer readable medium such as, for example a universal serial bus (USB) memory, a plug-in card, an embedded drive or a read only memory (ROM). Figure 5 illustrates an example computer readable medium in the form of a compact disc (CD) ROM 500. The computer readable medium has stored thereon a computer program comprising program instructions. The computer program is loadable into a data processor (PROC; e.g., data processing circuitry or a data processing unit) 520, which may, for example, be comprised in a communication node 510. When loaded into the data processor, the computer program may be stored in a memory (MEM) 530 associated with or comprised in the data processor. According to some embodiments, the computer program may, when loaded into and run by the data processor, cause execution of method steps according to, for example, any of the methods illustrated in Figure 1 or otherwise described herein.

Generally, all terms used herein are to be interpreted according to their ordinary meaning in the relevant technical field, unless a different meaning is clearly given and/or is implied from the context in which it is used.

Reference has been made herein to various embodiments. However, a person skilled in the art would recognize numerous variations to the described embodiments that would still fall within the scope of the claims.

For example, the method embodiments described herein discloses example methods through steps being performed in a certain order. However, it is recognized that these sequences of events may take place in another order without departing from the scope of the claims. Furthermore, some method steps may be performed in parallel even though they have been described as being performed in sequence. Thus, the steps of any methods disclosed herein do not have to be performed in the exact order disclosed, unless a step is explicitly described as following or preceding another step and/or where it is implicit that a step must follow or precede another step.

In the same manner, it should be noted that in the description of embodiments, the partition of functional blocks into particular units is by no means intended as limiting. Contrarily, these partitions are merely examples. Functional blocks described herein as one unit may be split into two or more units. Furthermore, functional blocks described herein as being implemented as two or more units may be merged into fewer (e.g. a single) unit.

Any feature of any of the embodiments disclosed herein may be applied to any other embodiment, wherever suitable. Likewise, any advantage of any of the embodiments may apply to any other embodiments, and vice versa.

Hence, it should be understood that the details of the described embodiments are merely examples brought forward for illustrative purposes, and that all variations that fall within the scope of the claims are intended to be embraced therein.

## Claims

1. A method for controlling execution in a parallel processing device of a plurality of processing jobs for communication reception in a communication network, the method comprising:
grouping (130) the plurality of processing jobs into one or more groups, wherein the number of groups is less than the number of processing jobs of the plurality of processing jobs; and
launching (150), for each group, processing of the processing jobs of the group using a single execution call, wherein the processing comprises parallel processing of at least some of the processing jobs of the group,
wherein each processing job is for a received data unit,
wherein each data unit relates to one or more of: a carrier, a baseband port, a reception antenna, and a transmitter of the data unit, wherein the transmitter is associated with a cell unit of the communication network, and
wherein grouping the processing jobs comprises one or more of:
letting processing jobs for data units relating to a same carrier belong to the same group;
letting processing jobs for data units relating to different carriers belong to different groups;
letting processing jobs for data units relating to different baseband ports belong to the same group;
letting processing jobs for data units relating to different reception antennas belong to the same group;
letting processing jobs for data units relating to different transmitters belong to the same group;
letting processing jobs for data units relating to transmitters associated with different cell units belong to the same group;
letting processing jobs with respective expected processing times that falls within a processing time range belong to the same group;
letting processing jobs with respective kernel dimensions that falls within a kernel dimension range belong to the same group;
letting processing jobs for the same number of baseband ports belong to the same group;
letting processing jobs for data units relating to transmitters associated with respective data rates that falls within a data rate range belong to the same group; and
letting processing jobs for data units relating to transmitters with the same, or over-lapping, communication resource allocation belong to the same group.

2. The method of claim 1, wherein the processing jobs are layer one - L1 - processing jobs and/or baseband - BB - processing jobs.

3. The method of claim 1, further comprising receiving (140) content of each of the data units from a radio processing device.

4. The method of any of claims 1 through 3, further comprising acquiring (120) scheduling information of the communication reception, and wherein grouping the processing jobs is based on the scheduling information.

5. The method of claim 4, further comprising performing communication scheduling (110) for which communication reception is in accordance with the grouping.

6. The method of any of claims 1 through 5, wherein the processing jobs of each group are organized in an execution graph, wherein a node of the execution graph represents one or more processing jobs of the group, and wherein launching processing of the processing jobs of the group comprises initiating execution of one or more initial nodes of the execution graph using the single execution call.

7. The method of any of claims 1 through 6, wherein each of the processing jobs relates to one or more of: an input scaling operation, a fast Fourier transform - FFT - operation, a channel estimation operation, an equalization operation, a demodulation operation, a descrambling operation, a de-rate matching operation, a channel decoding operation, a cyclic redundancy check - CRC - operation, a processing result read-out operation, and an end-of-execution operation.

8. The method of any of claims 1 through 7, wherein the groups are non-overlapping.

9. The method of any of claims 1 through 8, wherein at least one of the one or more groups comprises two or more processing jobs.

10. An apparatus for controlling execution in a parallel processing device of a plurality of processing jobs for communication reception in a communication network, the apparatus comprising controlling circuitry (200) configured to cause:
grouping of the plurality of processing jobs into one or more groups, wherein the number of groups is less than the number of processing jobs of the plurality of processing jobs; and
launch, for each group, of processing of the processing jobs of the group using a single execution call, wherein the processing comprises parallel processing of at least some of the processing jobs of the group,
wherein each processing job is for a received data unit,
wherein each data unit relates to one or more of: a carrier, a baseband port, a reception antenna, and a transmitter of the data unit, wherein the transmitter is associated with a cell unit of the communication network, and
wherein the controlling circuitry is configured to cause the grouping of the processing jobs by causing one or more of:
processing jobs for data units relating to a same carrier to belong to the same group;
processing jobs for data units relating to different carriers to belong to different groups;
processing jobs for data units relating to different baseband ports to belong to the same group;
processing jobs for data units relating to different reception antennas to belong to the same group;
processing jobs for data units relating to different transmitters to belong to the same group;
processing jobs for data units relating to transmitters associated with different cell units to belong to the same group;
processing jobs with respective expected processing times that falls within a processing time range to belong to the same group;
processing jobs with respective kernel dimensions that falls within a kernel dimension range to belong to the same group;
processing jobs for the same number of baseband ports to belong to the same group;
processing jobs for data units relating to transmitters associated with respective data rates that falls within a data rate range to belong to the same group; and
processing jobs for data units relating to transmitters with the same, or over-lapping, communication resource allocation to belong to the same group.

11. The apparatus of claim 10, wherein the processing jobs are layer one - L1- processing jobs and/or baseband - BB - processing jobs.

12. The apparatus of claim 10, wherein the controlling circuitry is further configured to cause reception of content of each of the data units from a radio processing device.

13. The apparatus of any of claims 10 through 12, wherein the controlling circuitry is further configured to cause acquisition of scheduling information of the communication reception, and wherein the controlling circuitry is configured to cause the grouping of the processing jobs based on the scheduling information.

14. The apparatus of claim 13, wherein the controlling circuitry is further configured to cause communication scheduling for which communication reception is in accordance with the grouping.

15. A communication node comprising the apparatus of any of claims 10 through 14.

## Patentansprüche

1. Verfahren zum Steuern einer Ausführung in einer Parallelverarbeitungsvorrichtung einer Vielzahl von Verarbeitungsaufträgen für einen Kommunikationsempfang in einem Kommunikationsnetzwerk, das Verfahren umfassend:
Gruppieren (130) der Vielzahl von Verarbeitungsaufträgen in eine oder mehrere Gruppen, wobei die Anzahl von Gruppen geringer als die Anzahl von Verarbeitungsaufträgen der Vielzahl von Verarbeitungsaufträgen ist; und
Starten (150), für jede Gruppe, einer Verarbeitung der Verarbeitungsaufträge der Gruppe unter Verwendung eines einzigen Ausführungsaufrufs, wobei die Verarbeitung eine Parallelverarbeitung von mindestens einigen der Verarbeitungsaufträge der Gruppe umfasst,
wobei jeder Verarbeitungsauftrag für eine empfangene Dateneinheit ist,
wobei sich jede Dateneinheit auf eines oder mehrere bezieht von: einem Träger, einem Basisbandanschluss, einer Empfangsantenne und einem Sender der Dateneinheit, wobei der Sender einer Zelleinheit des
Kommunikationsnetzwerks zugeordnet ist, und
wobei das Gruppieren der Verarbeitungsaufträge eines oder mehrere umfasst von:
Zulassen, dass Verarbeitungsaufträge für Dateneinheiten, die sich auf einen selben Träger beziehen, zu derselben Gruppe gehören;
Zulassen, dass Verarbeitungsaufträge für Dateneinheiten, die sich auf unterschiedliche Träger beziehen, zu unterschiedlichen Gruppen gehören;
Zulassen, dass Verarbeitungsaufträge für Dateneinheiten, die sich auf unterschiedliche Basisbandanschlüsse beziehen, zu derselben Gruppe gehören;
Zulassen, dass Verarbeitungsaufträge für Dateneinheiten, die sich auf unterschiedliche Empfangsantennen beziehen, zu derselben Gruppe gehören;
Zulassen, dass Verarbeitungsaufträge für Dateneinheiten, die sich auf unterschiedliche Sender beziehen, zu derselben Gruppe gehören;
Zulassen, dass Verarbeitungsaufträge für Dateneinheiten, die sich auf Sender beziehen, die unterschiedlichen Zelleneinheiten zugeordnet sind, zu derselben Gruppe gehören;
Zulassen, dass Verarbeitungsaufträge mit jeweiligen erwarteten Verarbeitungszeiten, die in einen Verarbeitungszeitbereich fallen, zu derselben Gruppe gehören;
Zulassen, dass Verarbeitungsaufträge mit jeweiligen Kernel-Dimensionen, die in einen Kernel-Dimensionsbereich fallen, zu derselben Gruppe gehören;
Zulassen, dass Verarbeitungsaufträge für dieselbe Anzahl von Basisbandanschlüssen zu derselben Gruppe gehören;
Zulassen, dass Verarbeitungsaufträge für Dateneinheiten, die sich auf Sender beziehen, die jeweiligen Datenraten zugeordnet sind, die in einen Datenratenbereich fallen, zu derselben Gruppe gehören; und
Zulassen, dass Verarbeitungsaufträge für Dateneinheiten, die sich auf Sender mit derselben oder sich überschneidenden Kommunikationsressourcenzuteilung beziehen, zu derselben Gruppe gehören.

2. Verfahren nach Anspruch 1, wobei die Verarbeitungsaufträge Schichteins-Verarbeitungsaufträge - L1-Verarbeitungsaufträge - und/oder Basisbandverarbeitungsaufträge - BB-Verarbeitungsaufträge - sind.

3. Verfahren nach Anspruch 1, ferner umfassend das Empfangen (140) von Inhalt jeder der Dateneinheiten von einer Funkverarbeitungsvorrichtung.

4. Verfahren nach einem der Ansprüche 1 bis einschließlich 3, ferner umfassend ein Erfassen (120) von Planungsinformationen des Kommunikationsempfangs, und wobei das Gruppieren der Verarbeitungsaufträge auf den Planungsinformationen basiert.

5. Verfahren nach Anspruch 4, ferner umfassend ein Durchführen einer Kommunikationsplanung (110), für die der Kommunikationsempfang gemäß der Gruppierung erfolgt.

6. Verfahren nach einem der Ansprüche 1 bis einschließlich 5, wobei die Verarbeitungsaufträge jeder Gruppe in einem Ausführungsgraphen organisiert sind, wobei ein Knoten des Ausführungsgraphen einen oder mehrere Verarbeitungsaufträge der Gruppe repräsentiert, und wobei ein Starten der Verarbeitung der Verarbeitungsaufträge der Gruppe ein Initiieren der Ausführung eines oder mehrerer anfänglicher Knoten des Ausführungsgraphen unter Verwendung des einzelnen Ausführungsaufrufs umfasst.

7. Verfahren nach einem der Ansprüche 1 bis einschließlich 6, wobei sich jeder der Verarbeitungsaufträge auf einen oder mehrere bezieht von: einer Eingangsskalierungsoperation, einer schnellen Fourier-Transformationsoperation - FFT-Operation -, einer Kanalschätzungsoperation, einer Entzerrungsoperation, einer Demodulationsoperation, einer Entverwürfelungsoperation, einer De-Ratenübereinstimmungsoperation, einer Kanaldecodierungsoperation, einer zyklischen Redundanzprüfungsoperation - CRC-Operation -, einer Verarbeitungsergebnisausleseoperation und einer Ausführungsendeoperation.

8. Verfahren nach einem der Ansprüche 1 bis einschließlich 7, wobei die Gruppen sich nicht überlappen.

9. Verfahren nach einem der Ansprüche 1 bis einschließlich 8, wobei mindestens eine der einen oder der mehreren Gruppen zwei oder mehr Verarbeitungsaufträge umfasst.

10. Einrichtung zum Steuern der Ausführung in einer Parallelverarbeitungsvorrichtung einer Vielzahl von Verarbeitungsaufträgen für den Kommunikationsempfang in einem Kommunikationsnetzwerk, die Einrichtung umfassend eine Steuerschaltung (200), die konfiguriert ist, um zu veranlassen:
Gruppieren der Vielzahl von Verarbeitungsaufträgen in eine oder mehrere Gruppen, wobei die Anzahl von Gruppen geringer als die Anzahl von Verarbeitungsaufträgen der Vielzahl von Verarbeitungsaufträgen ist; und
Starten, für jede Gruppe, der Verarbeitung der Verarbeitungsaufträge der Gruppe unter Verwendung eines einzigen Ausführungsaufrufs, wobei die Verarbeitung Parallelverarbeitung von mindestens einigen der Verarbeitungsaufträge der Gruppe umfasst,
wobei jeder Verarbeitungsauftrag für eine empfangene Dateneinheit ist,
wobei sich jede Dateneinheit auf eines oder mehrere bezieht von: einem Träger, einem Basisbandanschluss, einer Empfangsantenne und einem Sender der Dateneinheit, wobei der Sender einer Zelleinheit des Kommunikationsnetzwerks zugeordnet ist, und
wobei die Steuerschaltung konfiguriert ist, um das Gruppieren der Verarbeitungsaufträge durch Veranlassen eines oder mehrere zu veranlassen von:
Verarbeitungsaufträgen für Dateneinheiten, die sich auf einen selben Träger beziehen, um derselben Gruppe zu gehören;
Verarbeitungsaufträgen für Dateneinheiten, die sich auf unterschiedliche Träger beziehen, um zu unterschiedlichen Gruppen zu gehören;
Verarbeitungsaufträgen für Dateneinheiten, die sich auf unterschiedliche Basisbandanschlüsse beziehen, um zu derselben Gruppe zu gehören;
Verarbeitungsaufträgen für Dateneinheiten, die sich auf unterschiedliche Empfangsantennen beziehen, um zu derselben Gruppe zu gehören;
Verarbeitungsaufträgen für Dateneinheiten, die sich auf unterschiedliche Sender beziehen, um zu derselben Gruppe zu gehören;
Verarbeitungsaufträgen für Dateneinheiten, die sich auf Sender beziehen, die unterschiedlichen Zelleneinheiten zugeordnet sind, um zu derselben Gruppe zu gehören;
Verarbeitungsaufträgen mit jeweiligen erwarteten Verarbeitungszeiten, die in einen Verarbeitungszeitbereich fallen, um zu derselben Gruppe zu gehören;
Verarbeitungsaufträgen mit jeweiligen Kernel-Dimensionen, die in einen Kernel-Dimensionsbereich fallen, um zu derselben Gruppe zu gehören;
Verarbeitungsaufträgen für dieselbe Anzahl von Basisbandanschlüssen, um zu derselben Gruppe gehören;
Verarbeitungsaufträgen für Dateneinheiten, die sich auf Sender beziehen, die jeweiligen Datenraten zugeordnet sind, die in einen Datenratenbereich fallen, um zu derselben Gruppe zu gehören; unds
Verarbeitungsaufträgen für Dateneinheiten, die sich auf Sender mit derselben oder sich überschneidenden Kommunikationsressourcenzuteilung beziehen, um zu derselben Gruppe zu gehören.

11. Einrichtung nach Anspruch 10, wobei die Verarbeitungsaufträge Schichteins-Verarbeitungsaufträge - L1-Verarbeitungsaufträge - und/oder Basisbandverarbeitungsaufträge - BB-Verarbeitungsaufträge - sind.

12. Einrichtung nach Anspruch 10, wobei die Steuerschaltung ferner konfiguriert ist, um einen Empfang von Inhalt jeder der Dateneinheiten von einer Funkverarbeitungsvorrichtung zu veranlassen.

13. Einrichtung nach einem der Ansprüche 10 bis einschließlich 12, wobei die Steuerschaltung ferner konfiguriert ist, um eine Erfassung von Planungsinformationen des Kommunikationsempfangs zu veranlassen, und wobei die Steuerschaltung konfiguriert ist, um das Gruppieren der Verarbeitungsaufträge basierend auf den Planungsinformationen zu veranlassen.

14. Einrichtung nach Anspruch 13, wobei die Steuerschaltung ferner konfiguriert ist, um eine Kommunikationsplanung zu veranlassen, für die der Kommunikationsempfang gemäß der Gruppierung erfolgt.

15. Kommunikationsknoten, umfassend die Einrichtung nach einem der Ansprüche 10 bis einschließlich 14.

## Revendications

1. Procédé permettant de commander l'exécution dans un dispositif de traitement parallèle d'une pluralité de tâches de traitement pour une réception de communication dans un réseau de communication, le procédé comprenant :
le regroupement (130) de la pluralité de tâches de traitement dans un ou plusieurs groupes, dans lequel le nombre de groupes est inférieur au nombre de tâches de traitement de la pluralité de tâches de traitement ; et
le lancement (150), pour chaque groupe, du traitement des tâches de traitement du groupe à l'aide d'un appel d'exécution unique, dans lequel le traitement comprend le traitement en parallèle d'au moins certaines des tâches de traitement du groupe,
dans lequel chaque tâche de traitement concerne une unité de données reçue,
dans lequel chaque unité de données se rapporte à un ou plusieurs parmi : une porteuse, un port en bande de base, une antenne de réception et un émetteur de l'unité de données, dans lequel l'émetteur est associé à une unité cellulaire du réseau de communication, et
dans lequel le regroupement des tâches de traitement comprend un ou plusieurs parmi :
le fait de permettre aux tâches de traitement pour des unités de données relatives à une même porteuse d'appartenir au même groupe ;
le fait de permettre aux tâches de traitement pour des unités de données relatives à différentes porteuses d'appartenir à des groupes différents ;
le fait de permettre aux tâches de traitement pour des unités de données relatives à différents ports de bande de base d'appartenir au même groupe ;
le fait de permettre aux tâches de traitement pour des unités de données relatives à différentes antennes de réception d'appartenir au même groupe ;
le fait de permettre aux tâches de traitement pour des unités de données relatives à différents émetteurs d'appartenir au même groupe ;
le fait de permettre aux tâches de traitement pour des unités de données relatives à des émetteurs associés à différentes unités de cellule d'appartenir au même groupe ;
le fait de permettre aux tâches de traitement avec des temps de traitement attendus respectifs qui se situent dans une plage de temps de traitement d'appartenir au même groupe ;
le fait de permettre aux tâches de traitement avec des dimensions de noyau respectives qui se situent dans une plage de dimensions de noyau d'appartenir au même groupe ;
le fait de permettre aux tâches de traitement pour le même nombre de ports en bande de base d'appartenir au même groupe ;
le fait de permettre aux tâches de traitement pour des unités de données relatives à des émetteurs associés à des débits de données respectifs qui se situent dans une plage de débits de données d'appartenir au même groupe ; et
le fait de permettre aux tâches de traitement pour des unités de données relatives à des émetteurs ayant la même allocation de ressources de communication, ou se chevauchant, d'appartenir au même groupe.

2. Procédé selon la revendication 1, dans lequel les tâches de traitement sont des tâches de traitement de couche une (L1) et/ou des tâches de traitement de bande de base (BB).

3. Procédé selon la revendication 1, comprenant en outre la réception (140) du contenu de chacune des unités de données provenant d'un dispositif de traitement radio.

4. Procédé selon l'une quelconque des revendications 1 à 3, comprenant en outre l'acquisition (120) d'informations de planification de la réception de communication, et dans lequel le regroupement des tâches de traitement est basé sur les informations de planification.

5. Procédé selon la revendication 4, comprenant en outre la réalisation d'une planification de communication (110) pour laquelle la réception de communication est conforme au regroupement.

6. Procédé selon l'une quelconque des revendications 1 à 5, dans lequel les tâches de traitement de chaque groupe sont organisées dans un graphe d'exécution, dans lequel un nœud du graphe d'exécution représente une ou plusieurs tâches de traitement du groupe, et dans lequel le lancement de traitement des tâches de traitement du groupe comprend le lancement de l'exécution d'un ou de plusieurs nœuds initiaux du graphe d'exécution à l'aide de l'appel d'exécution unique.

7. Procédé selon l'une quelconque des revendications 1 à 6, dans lequel chacun des tâches de traitement se rapporte à un ou plusieurs parmi : une opération de mise à l'échelle d'entrée, une opération de transformée de Fourier rapide (FFT), une opération d'estimation de canal, une opération d'égalisation, une opération de démodulation, une opération de désembrouillage, une opération de désadaptation de débit, une opération de décodage de canal, une opération de contrôle de redondance cyclique (CRC), une opération de lecture de résultat de traitement et une opération de fin d'exécution.

8. Procédé selon l'une quelconque des revendications 1 à 7, dans lequel les groupes sont sans chevauchement.

9. Procédé selon l'une quelconque des revendications 1 à 8, dans lequel au moins l'un parmi le ou les groupes comprend deux tâches de traitement ou plus.

10. Appareil permettant de commander l'exécution dans un dispositif de traitement parallèle d'une pluralité de tâches de traitement pour une réception de communication dans un réseau de communication, l'appareil comprenant une circuiterie de commande (200) configurée pour provoquer :
le regroupement de la pluralité de tâches de traitement dans un ou plusieurs groupes, dans lequel le nombre de groupes est inférieur au nombre de tâches de traitement de la pluralité de tâches de traitement ; et
le lancement, pour chaque groupe, du traitement des tâches de traitement du groupe à l'aide d'un appel d'exécution unique, dans lequel le traitement comprend le traitement parallèle d'au moins certaines des tâches de traitement du groupe,
dans lequel chaque tâche de traitement concerne une unité de données reçue,
dans lequel chaque unité de données se rapporte à un ou plusieurs parmi : une porteuse, un port en bande de base, une antenne de réception et un émetteur de l'unité de données, dans lequel l'émetteur est associé à une unité cellulaire du réseau de communication, et
dans lequel la circuiterie de commande est configurée pour provoquer le regroupement des tâches de traitement en provoquant un ou plusieurs parmi :
le traitement de tâches pour que des unités de données relatives à une même porteuse appartiennent au même groupe ;
le traitement de tâches pour que des unités de données relatives à différentes porteuses appartiennent à différents groupes ;
le traitement de tâches pour que des unités de données relatives à différents ports de bande de base appartiennent au même groupe ;
le traitement de tâches pour que des unités de données relatives à des antennes de réception différentes appartiennent au même groupe ;
le traitement de tâches pour que des unités de données relatives à différents émetteurs appartiennent au même groupe ;
le traitement de tâches pour que des unités de données relatives à des émetteurs associés à différentes unités cellulaires appartiennent au même groupe ;
le traitement de tâches dont les temps de traitement prévus respectifs se situent dans une plage de temps de traitement comme appartenant au même groupe ;
le traitement de tâches dont des dimensions de noyau respectives se situent dans une plage de dimensions de noyau comme appartenant au même groupe ;
le traitement de tâches pour que le même nombre de ports de bande de base appartienne au même groupe ;
le traitement de tâches pour que des unités de données relatives à des émetteurs associés à des débits de données respectifs qui se situent dans une plage de débit de données appartiennent au même groupe ; et
le traitement de tâches pour que des unités de données relatives à des émetteurs ayant la même allocation de ressources de communication, ou se chevauchant, appartiennent au même groupe.

11. Appareil selon la revendication 10, dans lequel les tâches de traitement sont des tâches de traitement de couche une (L1) et/ou des tâches de traitement de bande de base (BB).

12. Appareil selon la revendication 10, dans lequel la circuiterie de commande est en outre configurée pour provoquer la réception de contenu de chacune des unités de données provenant d'un dispositif de traitement radio.

13. Appareil selon l'une quelconque des revendications 10 à 12, dans lequel la circuiterie de commande est en outre configurée pour provoquer l'acquisition d'informations de planification de la réception de communication, et dans lequel la circuiterie de commande est configurée pour provoquer le regroupement des tâches de traitement sur la base des informations de planification.

14. Appareil selon la revendication 13, dans lequel la circuiterie de commande est en outre configurée pour provoquer une planification de communication pour laquelle la réception de communication est conforme au regroupement.

15. Nœud de communication comprenant l'appareil selon l'une quelconque des revendications 10 à 14.
